**Europäisches Patentamt**

**European Patent Office**

**Office européen des brevets**

(19)

(11) **EP 1 267 570 A1**

(12) **DEMANDE DE BREVET EUROPEEN**

(43) Date de publication:
**18.12.2002 Bulletin 2002/51**

(51) Int Cl.⁷: **H04N 5/33**

(21) Numéro de dépôt: **02291348.7**

(22) Date de dépôt: **03.06.2002**

| | |
|---|---|
| (84) Etats contractants désignés:<br>**AT BE CH CY DE DK ES FI FR GB GR IE IT LI LU MC NL PT SE TR**<br>Etats d'extension désignés:<br>**AL LT LV MK RO SI** | (71) Demandeur: **Sagem SA**<br>**75015 Paris (FR)** |
| (30) Priorité: **13.06.2001 FR 0107743** | (72) Inventeur: **BROEKAERT, Michel**<br>**78620 - L'etange-la-ville (FR)** |
| | (74) Mandataire: **Verdure, Stéphane**<br>**Cabinet Plasseraud,84 Rue d'Amsterdam**<br>**75440 Paris Cédex 09 (FR)** |

(54) **Procédé d'utilisation d'une camera thermique, dispositif pour sa mise en oeuvre,et camera thermique incorporant un tel dispositif**

(57)     L'invention propose un procédé d'utilisation d'une caméra thermique (100) comprenant les étapes consistant à :

a) refroidir (31) la caméra thermique ;
b) attendre (32) la réalisation d'une condition de stabilisation du rayonnement parasite interne de la caméra thermique ;
c) acquérir (33) une première image (51) et acquérir (35) une seconde image (52) d'une scène observée ;
d) calculer (36) une image différence (53) en effectuant la différence entre la seconde image (52) et la première image (51);
e) traiter (37) l'image différence (53).

FIG.3.

## Description

La présente invention concerne un procédé d'utilisation d'une caméra thermique, un dispositif pour sa mise en oeuvre, et une caméra thermique incorporant un tel dispositif.

Elle se rapporte au domaine des caméras thermiques, et trouve des applications, par exemple, dans les systèmes autodirecteurs pour engins tels que missiles ou robots. On peut aussi envisager des applications dans les systèmes de stabilisation d'un engin par rapport à un point du sol ou par rapport à un objet, ou encore dans les systèmes de veille automatique pour engins non stabilisés tels que bateaux, véhicules en marche, etc.

Dans de telles applications, la caméra thermique est utilisée pour l'acquisition d'images d'une scène observée, chaque image étant ensuite traitée selon les besoins de l'application. Ce traitement peut par exemple comprendre l'extraction et la poursuite d'objets ponctuels, l'extraction et la poursuite de contours, la reconnaissance de formes en vue de l'identification d'un objet, etc.

Une caméra thermique comprend un détecteur, dont la surface active réagit au rayonnement thermique (rayonnement infrarouge) en étant sensible aux différences de température résultant de ce rayonnement.

Dans les caméras thermiques, le détecteur à la particularité de réagir à deux flux optiques, dont l'un provient de la scène observée, et dont l'autre provient du rayonnement parasite interne de la caméra.

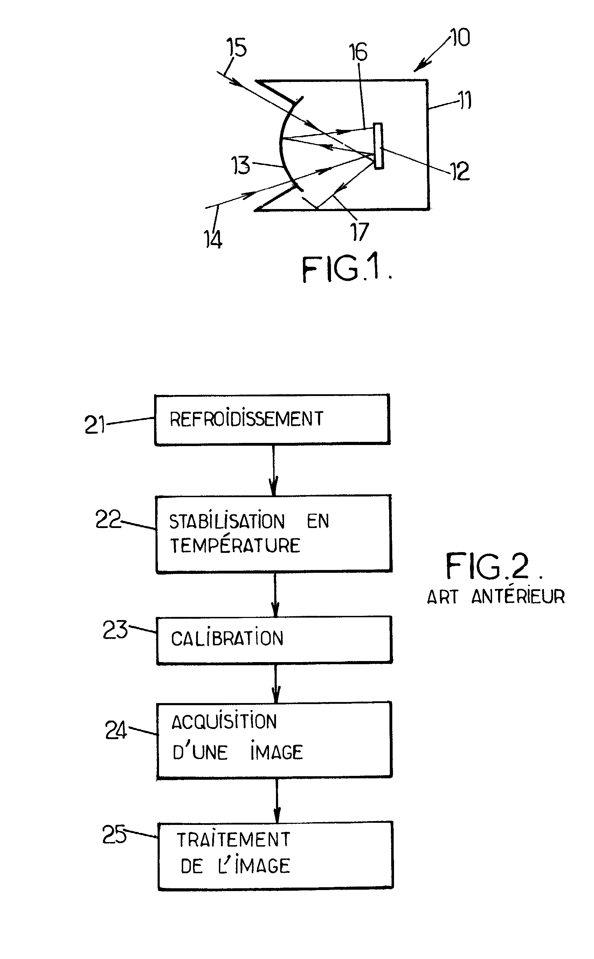

A la figure 1, on a représenté de façon schématique les éléments essentiels d'une caméra thermique. La caméra thermique 10 comprend un boîtier 11 qui abrite un détecteur thermique 12. Le flux optique 14,15 de la scène observée est orienté vers le plan focal du détecteur 12 par des éléments optiques comprenant par un ensemble de dioptres sphériques ou asphérodiffractifs 13. Un flux optique parasite interne 16,17 est généré, d'une part, par la réflexion du flux optique 14,15 sur la face active du détecteur 12, sur la face interne du dioptre sphérique 13, sur les parois internes du boîtier 11 et/ou sur tous autres éléments internes de la caméra 10, et d'autre part, par le rayonnement propre des éléments internes à la caméra et des parois internes de la caméra.

En raison du flux optique parasite interne, la réponse du détecteur n'est pas linéaire mais comprend un terme d'offset. Cette réponse $Y_n$ peut en effet être mise sous la forme suivante :

$$Y_n = a_n \cdot X_n + b_n \qquad (1)$$

où l'indice n se réfère aux cellules élémentaires composant le détecteur thermique ;

où $X_n$ est une fonction de la température de la scène observée et de la bande passante (domaine spectral) de la caméra thermique ;

où $a_n$ est un terme de gain qui rend compte du gain du dioptre sphérique 13 et du détecteur 12 ; et,

où $b_n$ est un terme d'offset qui comprend un premier terme, correspondant au signal provenant des rayonnements parasites, et un second terme, correspondant au courant d'obscurité du détecteur qui est une fonction de la température.

On notera que le flux parasite interne se traduit par une image parasite sur l'ensemble du champ de la caméra thermique.

Une calibration du détecteur thermique permet de déterminer le terme $b_n$, après la mise en service de la caméra thermique. Un traitement peut alors être appliqué aux données de l'image acquise pour atténuer l'effet des courants d'obscurité.

Le diagramme de la figure 2 illustre les étapes d'un procédé d'utilisation d'une caméra thermique selon l'art antérieur.

Afin d'acquérir l'image à la température ambiante, le détecteur de la caméra thermique doit préalablement être refroidi. Une phase de mise en froid 21 précède donc l'acquisition des images. Pendant cette phase, la température du détecteur de la caméra thermique décroît, et celle des éléments optiques et des parois de la caméra thermique évolue (globalement, elle s'élève) en conséquence, notamment, de ce refroidissement. La caméra thermique peut théoriquement fonctionner dès que la température du détecteur a atteint 77°K (degrés Kelvin). Dans les applications à un système autodirecteur, cette phase de mise en froid est très courte grâce par exemple à la mise en oeuvre d'un refroidissement par détente Joule-Thomson. Néanmoins, cette température n'est pas très stable et perturbe la calibration. La stabilisation en température de la caméra thermique prend sensiblement plus de temps. C'est pourquoi, dans une étape 22, on attend la réalisation d'une condition de stabilisation en température de la caméra thermique avant, dans une étape 23, de procéder à la calibration du détecteur thermique. Ensuite, dans une étape 24, on réalise l'acquisition d'une image. Cette image est alors traitée, selon les besoins de l'application, dans une étape 25.

Il résulte de ce qui précède que la caméra thermique ne peut être utilisée pour l'acquisition d'une image qu'à l'expiration d'une durée relativement longue après sa mise en service. Ceci provient de l'attente de la stabilisation en température de la caméra thermique, qui précède la calibration du détecteur thermique. Dans une application à des jumelles infrarouge pour vision nocturne, par exemple, cette stabilisation peut prendre trente minutes.

Dans les applications où il est nécessaire de pouvoir utiliser la caméra thermique avant la stabilisation en température complète de la caméra thermique, la calibration du détecteur intervient dès la fin de la phase de mise en froid, pendant la stabilisation en température de la caméra thermique et du détecteur.

Toutefois, alors que le gain est à peu près stable, les courants d'obscurité sont très dépendants de la température de la caméra thermique. En effet, ces courants évoluent en fonction, en particulier, de l'évolution thermique des éléments optiques et des parois de la caméra thermique, de l'évolution de la température du plan focal du détecteur, et de l'évolution des gradients thermiques entre le centre et les bords du plan focal du détecteur. Cette calibration est donc complexe et présente une efficacité relative.

L'invention vise à simplifier et à améliorer l'utilisation d'une caméra thermique en éliminant les inconvénients précités liés à la calibration du détecteur thermique.

Ce but est atteint, conformément à l'invention, grâce à un procédé d'utilisation d'une caméra thermique comprenant les étapes consistant à :

a) refroidir la caméra thermique ;
b) attendre la réalisation d'une condition de stabilisation du rayonnement parasite interne de la caméra thermique ;
c) acquérir une première image et acquérir une seconde image d'une scène observée ;
d) calculer une image différente en effectuant la différence entre la seconde image et la première image ;
e) traiter l'image différence.

En appliquant un tel procédé, la calibration du détecteur n'est plus nécessaire puisque, du fait que le traitement porte sur une image différence, les termes $b_n$ apparaissant dans la relation (1) précitée disparaissent. Le cas échéant, seule une correction des gains du détecteur thermique $a_n$ peut être nécessaire.

L'invention concerne en outre un dispositif pour la mise en oeuvre d'un procédé tel que défini ci-dessus, qui comprend :

- des moyens de vérification d'une condition de stabilisation du rayonnement parasite interne de la caméra thermique ;
- des moyens de calcul d'une image différence, qui effectuent la différence entre une première image et une seconde image d'une scène observée ;
- des moyens de traitement de l'image différence.

Elle concerne aussi une caméra thermique comprenant un détecteur thermique, des moyens de refroidissement du détecteur thermique, et un dispositif tel que défini ci-dessus.

D'autres caractéristiques et avantages de la présente invention apparaîtront encore à la lecture de la description détaillée qui va suivre. Celle-ci est purement illustrative et doit être lue en référence aux dessins annexés, sur lesquels on a représenté :

- à la figure 1, déjà analysée : un schéma d'une caméra thermique ;
- à la figure 2, également déjà analysée, le diagramme des étapes d'un procédé d'utilisation d'une caméra thermique selon l'art antérieur ;
- à la figure 3 : le diagramme des étapes d'un procédé d'utilisation d'une caméra thermique selon l'invention ;
- à la figure 4 : le diagramme des étapes d'un traitement de l'image différence dans un exemple d'application de l'invention ;
- aux figures 5a à 5d: des représentations schématiques d'images acquises et traitées selon le procédé de l'invention ;
- à la figure 6 : un schéma d'une caméra thermique selon l'invention ; et,
- à la figure 7 : la courbe d'évolution de la température du plan focal d'un détecteur thermique pendant la phase de mise en froid.

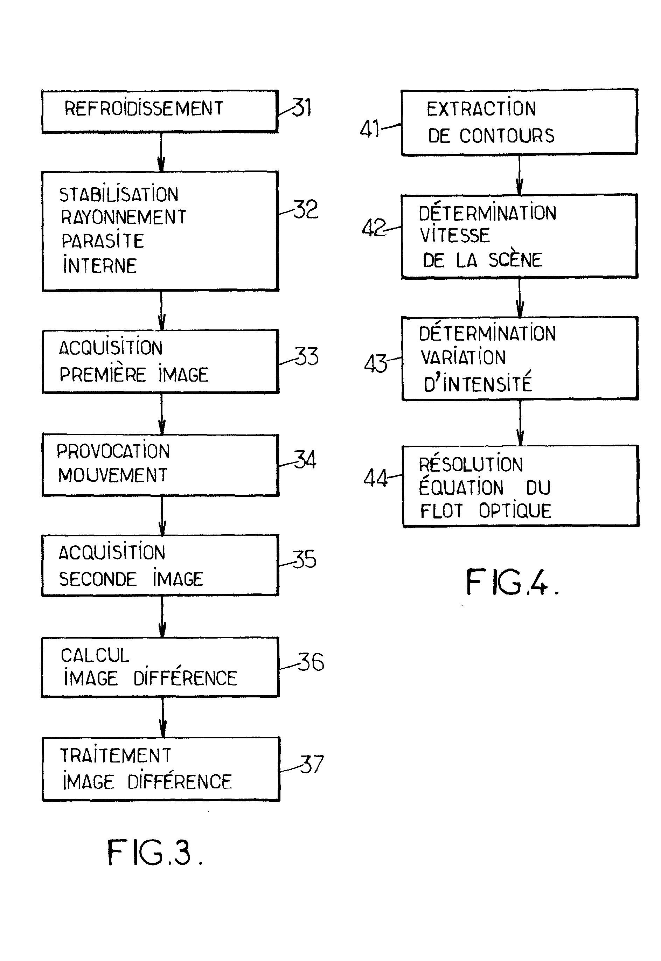

Le diagramme de la figure 3 illustre les étapes d'un procédé d'utilisation d'une caméra thermique selon l'invention.

Dans une étape de mise en froid 31, on procède au refroidissement du détecteur de la caméra. Dans un exemple, cette mise en froid est effectuée par détente Joule-Thomson. Cette mise en froid a pour but d'amener le détecteur à une température sensiblement égale à 77°K qui est la température de fonctionnement de ce détecteur.

Dans une étape 32, on attend la réalisation d'une condition de stabilisation du rayonnement parasite interne de la caméra thermique. Dans un mode de réalisation préféré, cette condition est réalisée à l'expiration d'une temporisation de durée prédéterminée. Cette durée prédéterminée est par exemple calculée une fois pour toute en usine, lors d'un test au cours duquel un corps noir est placé devant la caméra.

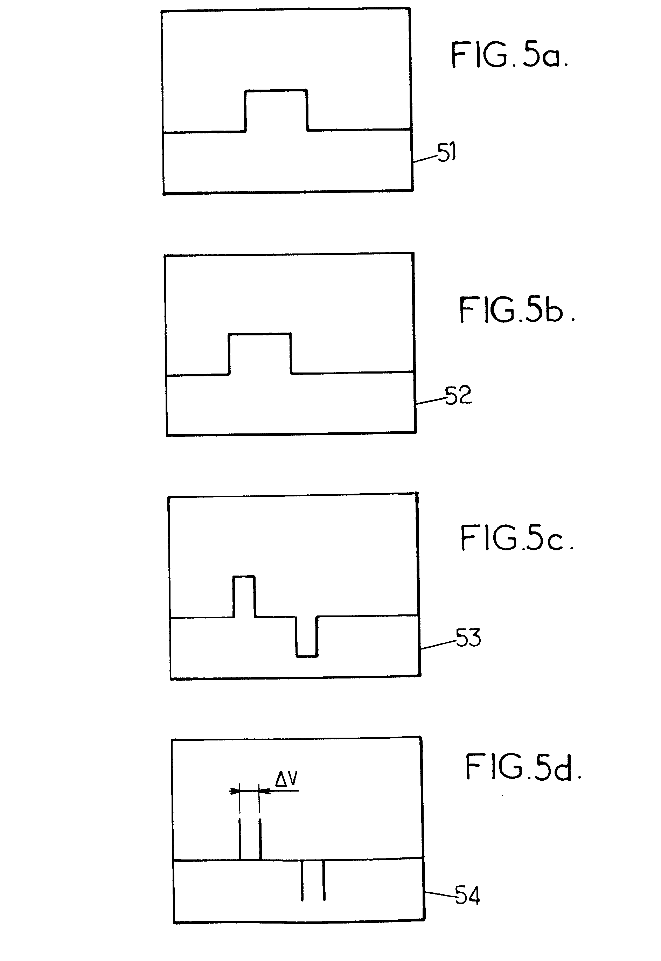

Dans une étape 33, on acquiert une première image de la scène observée. Dans un exemple, cette image est l'image 51 schématiquement représentée à la figure 5a. Dans cet exemple volontairement simple, la scène ne comprend qu'un élément significatif, ici de forme rectangulaire, tel qu'un immeuble.

Dans une étape 34, qui est facultative, on provoque alors un mouvement de la caméra thermique. L'intérêt de cette étape facultative apparaîtra plus loin.

Dans une étape 35, on acquiert ensuite une seconde image de la scène observée. Il s'agit par exemple de l'image 52 schématiquement représentée à la figure 5b. L'image 52 se distingue de l'image 51 précitée par l'effet du mouvement relatif de la scène observée par rapport au plan focal de la caméra. Dans l'exemple représenté, ce mouvement correspond à un déplacement horizontal vers la gauche de l'élément dans l'image.

Dans une étape 36, on calcule alors une image différence, en effectuant la différence entre l'image 52 et l'image 51 précitée. Cette image différence est par exemple l'image 53 schématiquement représentée à la figure 5c.

Dans une étape 37, l'image différence 53 est alors traitée selon les besoins de l'application.

Dans un exemple, le traitement de l'étape 37 comprend le calcul du flot optique pour au moins un point déterminé du plan focal du détecteur. En pratique, le traitement consistera en général à calculer le flot optique de tous les points du plan focal du détecteur, bien que l'on puisse se limiter à quelques points seulement. Une telle détection du flot optique est utilisée, notamment, pour l'analyse de scène réelle en vue de la commande d'un système autodirecteur ou d'un robot. Dans d'autres applications, elle est également utilisée pour la compression de films vidéos.

Soit un point déterminé du plan focal du détecteur, noté (x,y), où x et y sont les coordonnées de ce point. On note $I_{Tot,t}$ (x,y) la séquence vidéo au point (x, y). Le flot optique pour le point (x,y) est noté { V = ($v_x$, $v_y$) ; dI(x,y)}, où V = ($v_x$,$v_y$) est le champ de la vitesse de déplacement, dans le plan focal du détecteur thermique, d'un élément de la scène observée en ce point, et où dI (x,y) est la variation d'intensité de ce point.

Le flot optique est déterminé par la solution de l'équation du flot optique, qui est donnée par la relation suivante :

$$\frac{\partial I_t}{\partial_x} \cdot V_x + \frac{\partial I_t}{\partial_y} \cdot V_y + \frac{\partial I_t}{\partial_t} = \lambda \cdot I_{Tot,t} \qquad (2)$$

où $\lambda$ est la dérivée logarithmique du facteur d'illumination.

Comme on l'a dit plus haut, le détecteur réagit à deux flux optiques : celui de la scène observée et celui du rayonnement parasite interne de la caméra. La séquence vidéo $I_{Tot,t}$ (x,y) s'écrit donc :

$$I_{Tot,t} (x,y) = I_{1,t} (x,y) + I_{2,t} (x,y) \qquad (3)$$

où l'indice 1 est associé au flux optique de la scène observée, et l'indice 2 est associé au flux optique parasite interne de la caméra.

L'équation du flot optique donnée par la relation (2) ci-dessus, s'écrit donc de la manière suivante :

$$\frac{\partial I_{1,t}}{\partial_x} \cdot V_{1,x} + \frac{\partial I_{1,t}}{\partial_y} \cdot V_{1,y} + \frac{\partial I_{2,t}}{\partial_x} \cdot V_{2,x} + \frac{\partial I_{2,t}}{\partial_y} \cdot V_{2,y}$$

$$+ \frac{\partial I_{1,t}}{\partial_t} + \frac{\partial I_{2,t}}{\partial_t} = \lambda \cdot I_{1,t} + \lambda \cdot I_{2,t} \qquad (4)$$

où les indices notés obéissent à la même convention que ci-dessus.

Une première simplification de la relation (4) provient du fait que le déplacement lié au rayonnement parasite est nul, d'où il résulte que $v_{2,x} = v_{2,y} = 0$. Une seconde simplification provient de la mise en oeuvre de l'étape 32 selon l'invention. On rappelle que cette étape consiste à attendre la réalisation d'une condition de stabilisation du rayonnement parasite interne de la caméra avant de procéder à l'acquisition de la première image 51 (étape 33) puis à celle de l'image 52 (étape 35), d'où il résulte que $\frac{\partial I_{2,t}}{\partial_t} \cong 0$. En raison de ces simplifications, l'équation du flot optique est donnée par la relation ci-dessous :

$$\frac{\partial I_{1,t}}{\partial_x} \cdot V_{1,x} + \frac{\partial I_{1,t}}{\partial_y} \cdot V_{1,y} + \frac{\partial I_{1,t}}{\partial_t} = \lambda \cdot I_{1,t} + \lambda \cdot I_{2,t} \qquad (5)$$

qui peut aussi s'écrire de la manière suivante :

$$\frac{\partial I_{Tot,t}}{\partial_x} \cdot V_{1,x} + \frac{\partial I_{Tot,t}}{\partial_y} \cdot V_{1,y} + \frac{\partial I_{Tot,t}}{\partial_t} = I_{Tot,y} \qquad (6)$$

Comme on peut le constater, la résolution de cette équation, c'est-à-dire le calcul du flot optique qui vérifie la relation (6) ci-dessus, se limite à l'observation des vitesses $v_{1,x}$ et $v_{1,y}$ et de la variation d'intensité $\frac{\partial I_{1,t}}{\partial t}$ de la scène observée.

En pratique, la variation d'intensité $\frac{\partial I_{Tot,t}}{\partial t}$ du point (x,y) entre les images 51 et 52 correspond directement à l'intensité de l'image différence 53 en ce point. Cette variation est donc obtenue directement par l'étape 36 de calcul de l'image différence 53. La détection du flot optique consiste donc à trouver les vitesses $v_{1,x}$ et $v_{1,y}$. On utilise à cet effet, par exemple, des méthodes de type matricielles (ondelettes, etc.). Le traitement peut toutefois être simplifié si l'on se contente d'observer les contours et leurs évolutions dans le temps.

A cet effet, le traitement de l'étape 37 comprend alors les étapes suivantes, consistant à calculer le flot optique d'au moins un point du plan focal du détecteur, qui sont illustrées par le diagramme de la figure 4. On notera que ce traitement est appliqué à l'image différence 53, ce qui le rend plus simple et plus rapide, ainsi qu'il sera compris à la lecture de ce qui suit.

Dans une étape 41, on réalise l'extraction des contours de l'image différence 53. Cette opération est par exemple réalisée par la mise en oeuvre d'un algorithme de calcul de type « algorithme de Sobel ». Le résultat de ce calcul est illustré par le schéma de la figure 5d.

Dans une étape 42, on détermine alors les coordonnées $v_{1,x}$ et $v_{1,y}$ du champ vitesse V = ($v_{1,x}$,$v_{1,y}$) de l'élément au point (x,y). Dans l'exemple représenté à la figure 5d, la valeur $v_{1,x}$ correspondant à la vitesse de déplacement de l'élément de la scène observée (ici un déplacement horizontal uniquement) apparaît directement par l'écart entre les contours correspondant de l'image différence 53. On notera que la vitesse $v_{1,y}$ d'un déplacement vertical de l'objet serait déterminée de la même manière.

Dans une étape 43, on détermine en outre la variation d'intensité au point (x,y) entre les images 51 et 52. De manière avantageuse, cette variation correspond à l'intensité de l'image différence 53. Elle est donc obtenue directement par détermination de l'intensité de l'image différence 53 au point (x,y).

On notera que l'ordre des étapes 41 et 42 d'une part, et de l'étape 43 d'autre part, peut être inversé sans conséquence sur le résultat du traitement.

Dans une étape 44, on résout alors l'équation du flot optique définie par la relation (6) ci-dessus, pour le point (x,y) considéré, à partir des coordonnées du champ de vitesse et de la variation d'intensité obtenue aux étapes respectivement 42 et 43.

En pratique, un déplacement relatif de l'élément de la scène observée dans le plan focal du détecteur thermique correspondant à un seul pixel suffit à permettre la mise en oeuvre du procédé. Un tel déplacement est, la plupart du temps, naturellement provoqué par le mouvement propre de la caméra thermique, résultant par exemple du mouvement de l'engin ou du robot sur lequel elle est montée, ou du tremblement naturel de la main de l'utilisateur qui la maintient. En conséquence, l'étape 34 peut être omise. Elle est néanmoins nécessaire dans les applications où la caméra thermique, et plus particulièrement le détecteur thermique, sont parfaitement stables.

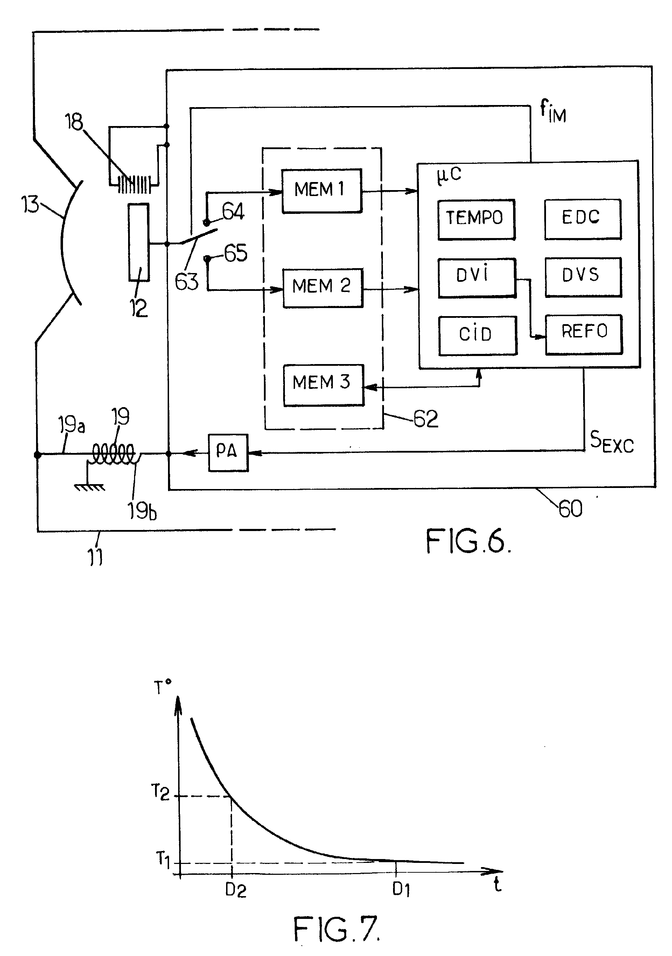

La figure 6, sur laquelle les mêmes éléments qu'à la figure 1 portent les mêmes références, donne le schéma d'une caméra thermique 100 selon l'invention.

La caméra 100 comprend en général un boîtier 11, ainsi qu'au moins un élément optique 13. En outre, elle comprend un détecteur thermique 12, des moyens 18 de refroidissement du détecteur, et un dispositif 60 pour la mise en oeuvre d'un procédé tel que décrit ci-dessus. Lorsque cela est nécessité par l'application, elle comprend aussi des moyens 19 pour provoquer un mouvement de la caméra.

Sur la figure, seule une partie du boîtier 11 est représentée. L'élément optique 13 est par exemple un dioptre sphérique, permettant de focaliser l'image de la scène observée sur le détecteur thermique 12.

Le détecteur thermique est par exemple une matrice au format 4/3 (quatre tiers), de surface égale à 10 mm$^2$ (millimètres carrés), dont les dimensions sont, par exemple, 7,8 mm (millimètres) de longueur et 9,5 mm de diagonale.

Les moyens de refroidissement 18 sont par exemple adaptés pour fonctionner par détente Joule-Thomson. Ils sont activés dès la mise en service de la caméra thermique 100.

Le dispositif 60 comprend une unité de traitement μC telle qu'un microprocesseur, un microcontrôleur ou un DSP (de l'anglais « Digital Signal Processor »). Cette unité de traitement assure la mise en oeuvre du procédé, et, notamment, elle réalise le traitement de l'image différence 53.

L'unité de traitement μC comprend des moyens TEMPO de vérification de la réalisation d'une condition de stabilisation du rayonnement parasite interne de la caméra thermique 100. Dans un exemple, ces moyens TEMPO sont des moyens de temporisation d'une durée prédéterminée, calculée en usine, ainsi qu'il a été exposé plus haut. Ces moyens sont activés dès la mise en service de la caméra thermique et l'activation des moyens de refroidissement 18.

Le dispositif 60 comprend également des moyens pour acquérir la première image 51 et la seconde image 52 de la scène observée. Dans un exemple de réalisation préféré, ces images sont acquises successivement à la fréquence image $f_{IM}$ de la caméra thermique 100. A cet effet, le dispositif 60 comprend un interrupteur 63 qui, lorsqu'il est dans une première position 64, oriente les données numériques délivrées en sortie du détecteur 12 vers une première mémoire MEM1, ou, lorsqu'il est dans une seconde position 65, oriente les données numériques délivrées en sortie du détecteur 12 vers une seconde mémoire MEM2. Cet interrupteur est commandé par un signal de commande à la fréquence $f_{IM}$ délivré par l'unité de traitement μC. Selon l'invention, l'acquisition des images de la scène observée n'a lieu qu'après la réalisation de la condition de stabilisation du rayonnement parasite interne de la caméra thermique 100.

L'unité de traitement μC comprend en outre des moyens CID de calcul de l'image différence 53, qui effectuent la différence entre une première image 51, stockée dans la mémoire MEM1 ou la mémoire MEM2, et une seconde image 52 stockée dans la mémoire MEM2 ou la mémoire MEM1 respectivement.

Dans une variante, le dispositif 60 comprend des moyens analogiques répartis au niveau de chaque pixel de la caméra thermique pour stocker, pixel par pixel, la première image 51 et la seconde image 52, et pour en effectuer la différence. Ces moyens comprennent par exemple, au niveau de chaque pixel, et directement implantés sur le substrat de silicium qui porte l'élément optoélectronique du pixel, un premier et un second condensateur pour stocker la valeur du pixel respectivement dans la première image 51 et dans la seconde image 52, ainsi qu'un circuit analogique pour effectuer la différence entre les tensions respectives aux bornes de ces condensateurs.

Dans un exemple, l'image différence 53 est stockée dans une mémoire MEM3, en vue de son traitement ultérieur par l'unité de traitement μC.

Lorsque ce traitement comprend le calcul du flot optique d'au moins un point déterminé du plan focal du détecteur 12, l'unité de traitement μC comprend : un module EDC pour extraire les contours de l'image différence 53 ; un module DVS pour déterminer les valeurs du champ de vitesse, dans le plan focal de la caméra thermique, des éléments de la scène observée à ce point ; un module DVI pour déterminer les variations d'intensité pour ce point ; et un module REFO de résolution de l'équation du flot optique pour ce point.

Les modules TEMPO, CID, EDC, DVS, DVI et REFO sont par exemple des modules logiciels. Les mémoires MEM1, MEM2, et MEM3 sont par exemple des espaces mémoires spécialement alloués dans une mémoire 62 du dispositif 60. Lorsque l'unité de traitement µC est un microcontrôleur, la mémoire 62 peut être la mémoire du microcontrôleur.

Les moyens 19 pour provoquer un mouvement de la caméra thermique 100 sont par exemple réalisés par un électro-aimant formant vibrateur, ayant un élément mobile 19a dont une extrémité est fixée au boîtier 11 de la caméra 100, et qui peut se déplacer dans une bobine inductive 19b. Une borne de la bobine est reliée à la masse électrique, et l'autre est excitée par un signal d'excitation $S_{EXC}$ délivré par l'unité de traitement µC et amplifié par un module d'amplification de puissance PA du dispositif 60.

La figure 7 donne la courbe d'évolution de la température du plan focal du détecteur 12 d'une caméra thermique 100 en fonction du temps, pendant la phase de mise en froid de ce détecteur. Sur cette figure, on désigne par T1 la température du détecteur à partir de laquelle une caméra thermique selon l'art antérieur est utilisée, et par T2 celle à partir de laquelle une caméra thermique selon l'invention peut être utilisée. La température T2 étant supérieure à la température T1, on voit que le temps d'attente D2 après la mise en service de la caméra thermique dans le cas de l'invention est plus court que le temps d'attente D1 correspondant dans le cas de l'art antérieur. Ce raccourcissement provient de l'absence d'étape de calibration du détecteur qui, dans le cas de l'art antérieur, nécessite l'attente de la stabilisation en température de la caméra thermique.

**Revendications**

1. Procédé d'utilisation d'une caméra thermique (100) comprenant les étapes consistant à :

   a) refroidir (31) la caméra thermique ;
   b) attendre (32) la réalisation d'une condition de stabilisation du rayonnement parasite interne de la caméra thermique (100) ;
   c) acquérir (33) une première image (51) et acquérir (35) une seconde image (52) d'une scène observée ;
   d) calculer (36) une image différence (53) en effectuant la différence entre la seconde image (52) et la première image (51);
   e) traiter (37) l'image différence (53).

2. Procédé selon la revendication 1, suivant lequel, à l'étape b), la condition de stabilisation du rayonnement parasite interne de la caméra thermique (100) est une temporisation de durée prédéterminée (D2).

3. Procédé selon la revendication 1 ou la revendication 2, suivant lequel, à l'étape c), la première image (51) et la seconde image (52) sont des images de la scène observée, successivement acquises à la fréquence image ($f_{IM}$) de la caméra thermique (100).

4. Procédé selon l'une quelconque des revendications 1 à 3, suivant lequel le traitement de l'étape e) comprend le calcul (41-44) du flot optique pour au moins un point déterminé du plan focal de la caméra thermique (100).

5. Procédé selon la revendication 4, suivant lequel le calcul du flot optique comprend une étape (41) d'extraction des contours de l'image différence (53) pour en déduire la vitesse de déplacement d'au moins un élément de la scène observée dans le plan focal de la caméra thermique (100) par détermination de l'écart entre des contours correspondants de l'image différence (53).

6. Procédé selon l'une quelconque des revendications précédentes, comprenant en outre une étape (34) consistant à provoquer un mouvement de la caméra thermique (100) entre l'acquisition de la première image (51) et l'acquisition de la seconde image (52).

7. Dispositif (60) pour la mise en oeuvre d'un procédé selon l'une quelconque des revendications 1 à 6, comprenant :

   - des moyens (TEMPO) de vérification d'une condition de stabilisation du rayonnement parasite interne de la caméra thermique (100) ;
   - des moyens (CID) de calcul d'une image différence (53), qui effectuent la différence entre une première image (51) et une seconde image (52) d'une scène observée ;
   - des moyens (µC) de traitement de l'image différence (53).

8. Dispositif selon la revendication 7, dans lequel les moyens (TEMPO) de vérification de la réalisation d'une condition de stabilisation du rayonnement parasite interne de la caméra thermique, comprennent des moyens de temporisation d'une durée prédéterminée (D2).

9. Dispositif selon la revendication 7 ou la revendication 8, comprenant des moyens (63,62) pour acquérir successivement la première et la seconde image de la scène observée à la fréquence image ($f_{IM}$) de la caméra thermique (100).

**10.** Dispositif selon l'une quelconque des revendications 7 à 9, comprenant des moyens analogiques répartis au niveau de chaque pixel de la caméra thermique (100), pour stocker, pixel par pixel, la première image (51) et la seconde image (52) et pour en effectuer la différence.

**11.** Dispositif selon l'une quelconque des revendications 7 à 10, dans lequel les moyens de traitement ($\mu$C) comprennent un module (REFO) pour calculer le flot optique d'au moins un point déterminé du plan focal de la caméra thermique (100).

**12.** Dispositif selon la revendication 11, dans lequel les moyens de calcul ($\mu$C) comprennent un module (EDC) pour extraire les contours de l'image différence (53).

**13.** Dispositif selon l'une quelconque des revendications 7 à 12, comprenant en outre des moyens (19) pour provoquer un mouvement de la caméra thermique (100).

**14.** Caméra thermique (100) comprenant un détecteur thermique (12), des moyens (18) de refroidissement du détecteur thermique (12) et un dispositif (60) selon l'une quelconque des revendications 7 à 13.

FIG.1.

FIG.2.
ART ANTÉRIEUR

Boxes in flowchart:
- 21 — REFROIDISSEMENT
- 22 — STABILISATION EN TEMPÉRATURE
- 23 — CALIBRATION
- 24 — ACQUISITION D'UNE IMAGE
- 25 — TRAITEMENT DE L'IMAGE

REFROIDISSEMENT — 31

STABILISATION
RAYONNEMENT
PARASITE
INTERNE — 32

ACQUISITION
PREMIÈRE IMAGE — 33

PROVOCATION
MOUVEMENT — 34

ACQUISITION
SECONDE IMAGE — 35

CALCUL
IMAGE DIFFÉRENCE — 36

TRAITEMENT
IMAGE DIFFÉRENCE — 37

FIG.3.

41 — EXTRACTION
DE CONTOURS

42 — DÉTERMINATION
VITESSE
DE LA SCÈNE

43 — DÉTERMINATION
VARIATION
D'INTENSITÉ

44 — RÉSOLUTION
ÉQUATION DU
FLOT OPTIQUE

FIG.4.

FIG.5a.

51

FIG.5b.

52

FIG.5c.

53

FIG.5d.

ΔV

54

FIG.6.

FIG.7.

**Office européen des brevets**

## RAPPORT DE RECHERCHE EUROPEENNE

Numéro de la demande

EP 02 29 1348

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | EP 0 651 566 A (IBM) 3 mai 1995 (1995-05-03) | 1,3,4 | H04N5/33 |
| Y | * colonne 1, ligne 12-15 * <br> * colonne 4, ligne 22-30 * <br> * colonne 10, ligne 3-13 * <br> --- | 5 | |
| Y | EP 0 550 101 A (PHILIPS ELECTRONIQUE LAB ;PHILIPS NV (NL)) 7 juillet 1993 (1993-07-07) * page 1, ligne 1-12 * <br> ----- | 5 | |

**DOMAINES TECHNIQUES RECHERCHES (Int.Cl.7)**

H04N

Le présent rapport a été établi pour toutes les revendications

| Lieu de la recherche | Date d'achèvement de la recherche | Examinateur |
|---|---|---|
| LA HAYE | 9 octobre 2002 | Wahba, A |

## ANNEXE AU RAPPORT DE RECHERCHE EUROPEENNE
## RELATIF A LA DEMANDE DE BREVET EUROPEEN NO.

EP 02 29 1348

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

09-10-2002

| Document brevet cité au rapport de recherche | | Date de publication | Membre(s) de la famille de brevet(s) | | Date de publication |
|---|---|---|---|---|---|
| EP 0651566 | A | 03-05-1995 | US | 5449907 A | 12-09-1995 |
| | | | EP | 0651566 A1 | 03-05-1995 |
| | | | JP | 7128696 A | 19-05-1995 |
| EP 0550101 | A | 07-07-1993 | FR | 2685842 A1 | 02-07-1993 |
| | | | EP | 0550101 A1 | 07-07-1993 |
| | | | JP | 5314391 A | 26-11-1993 |

EPO FORM P0460

Pour tout renseignement concernant cette annexe : voir Journal Officiel de l'Office européen des brevets, No.12/82